# FASCICULE DE BREVET EUROPEEN

(11) **EP 1 019 999 B1**
(45) Date de publication et mention de la délivrance du brevet: **29.08.2007**
(21) Numéro de dépôt: 99934805.5
(22) Date de dépôt: 29.07.1999
(51) Int. Cl.: H02J 7/35, H02J 7/14

(54) **DISPOSITIF DE RECHARGE AUTONOME POUR TELEPHONE PORTABLE ET/OU BATTERIE ET/OU ETUI DE PROTECTION**
VORRICHTUNG ZUR SELBSTÄNDIGEN WIEDERLADUNG VON EINEM TRAGBAREN TELEFON UND/ODER BATTERIE UND/ODER SCHUTZETUI
SELF-CONTAINED RECHARGING DEVICE FOR PORTABLE TELEPHONE AND/OR BATTERY AND/OR PROTECTIVE CASE

(30) Priorité: 30.07.1998 FR 9809957
(43) Date de publication de la demande: 19.07.2000
(73) Titulaire: Sarl Tecknisolar-Seni, 35403 Saint-Malo Cedex (FR)
(72) Inventeur: BARGUIRDJIAN, Pascal, F-35400 Saint-Malo (FR)
(74) Mandataire: Maillet, Alain
(86) Numéro de dépôt international: PCT/FR1999/001870
(87) Numéro de publication internationale: WO 2000/007277

(56) Documents cités:
- WO-A-97/39491
- WO-A-98/05900
- US-A- 4 054 826
- US-A- 5 363 445
- US-A- 5 579 388
- US-A- 5 644 207
- PATENT ABSTRACTS OF JAPAN vol. 098, no. 011, 30 septembre 1998 (1998-09-30) & JP 10 146213 A (TDK CORP), 2 juin 1998 (1998-06-02)

## Description

La présente invention concerne un dispositif ayant pour objet de recharger les batteries d'un téléphone portable mobile (cellulaire) par l'intermédiaire d'un dispositif photovoltaïque et vibratoire doté d'un gestionnaire et d'un amplificateur d'énergie lumineuse artificielle et naturelle et de masselotte magnétique à inertie bille sensible aux mouvements afin d'obtenir une alimentation autonome.

En effet actuellement tous les téléphones portables mobiles (cellulaires) sont équipés de batteries au Nickel métal hybride ou de batteries au lithium ion ou de batteries au Cadmium Nickel rechargeables uniquement sur le secteur 220volts ou par prise d'allume-cigare sur les véhicules, ce qui après recharge, donne quelques dizaines d'heures d'autonomie.

### Le dispositif actuel présente plusieurs inconvénients :

Premièrement, lorsque le téléphone portable mobile (cellulaire) est déchargé, batteries basses, la communication, par l'intermédiaire de l'émission-réception du téléphone se coupe. Et pour le recharger, il est nécessaire de le brancher, quelques heures, sur le secteur (220volts) et ceci à condition d'avoir une prise électrique à proximité ou d'avoir un allume-cigare de véhicule ou autre à disposition etc...

Deuxièmement, si l'utilisateur du téléphone portable mobile (cellulaire) se trouve en pleine mer, à la campagne ou à la montagne, ou par exemple sur un terrain de camping dans une tente et de nuit et dépourvu de source électrique permettant la recharge de son téléphone ; il ne pourra pas se servir de son téléphone portable mobile (cellulaire) si ses batteries sont déchargées. En effet, l'émetteur-récepteur du téléphone portable a besoin, lors de l'utilisation, d'une énergie continuelle en tension et en courant délivrée par sa batterie.

Troisièmement le téléphone portable mobile (cellulaire), après être rechargé sur le secteur 220 volts ou sur l'allume-cigare d'une voiture par exemple, et lorsqu'il est mis en veille pour recevoir des communications, consommera du courant électrique et sa batterie sera complètement déchargée après quelques dizaines d'heures de fonctionnement.

Un dispositif selon l'état de la technique est décrit dans le document WO-A-9739431.

Pour éviter tous ces inconvénients, faciliter, et rendre crédibles auprès de leurs utilisateurs l'utilisation des téléphones portables mobiles (cellulaires), GSM [Global System Mobile], UMTS [Universal Mobile Telephone System] ou tout autre moyen de communication disposant d'un émetteur-récepteur, permettant entre autre la liaison avec le réseau téléphonique, la présente invention a pour objet de fournir une tension et un courant électrique permanent et autonome et ceci grâce à la lumière, et à la vibration, et également par l'intermédiaire d'un remontoir manuel à ressort et électromécanique et ceci dans n'importe quelle position.

En effet, la présente invention concerne un dispositif selon la revendication 1 permettant la recharge continuelle de batteries au Nickel métal hybride, de batteries au Lithium ion ou de batteries au Cadmium Nickel destinées à alimenter ou à faire fonctionner, entre autre, un téléphone portable mobile cellulaire ou, un émetteur-récepteur de communication, ou un étui de protection de téléphone ou, un support de téléphone grâce à la lumière naturelle à l'extérieur et à l'intérieur d'un bâtiment (lumière du jour) et/ou grâce à l'éclairage artificiel provoqué par toutes sortes de générateurs lumineux tels que ampoule, lampe-torche, lampadaire, lampe-néon, etc.., ceci par l'intermédiaire d'un dispositif constitué de capteurs photovoltaïques dont la face avant est munie d'un amplificateur d'énergie (amplification lumineuse) et dotée d'une électronique de gestion capable d'analyser, de piloter automatiquement le branchement des capteurs photovoltaïques du dispositif en série ou en parallèle et ceci pour avoir, ou, plus de tension. électrique, ou, plus de courant électrique, et de différencier un éclairage artificiel, provoqué par toutes sortes de générateurs lumineux, d'une lumière du jour (lumière extérieure).

Si il n'y a pas de lumière du jour ou d'éclairage artificiel (nuit totalement noire) c'est-à-dire que le dispositif de recharge ne pourra pas délivrer une tension et un courant électrique pour la recharge batterie, malgré cet handicap, la présente invention dans ce dispositif de recharge permettra de fournir une tension et un courant électrique grâce aux vibrations ou aux mouvements établis par tout moyen électrique, physique, mécanique, entre autre le mouvement d'un va et vient provoqué par la marche de l'être humain, véhicule, train, bateau, etc...; par l'intermédiaire d'un dispositif constitué de masselotte magnétique équipée d'une bille en acier sensible aux mouvements et aux vibrations ou remontoir mécanique à ressort extra plat et fixé à l'intérieur du dispositif. Le mouvement provoqué par le va et vient de cette bille en acier tourne autour de la masselotte magnétique qui, par l'intermédiaire de l'électronique de gestion, restitue une énergie électrique continuelle. En effet, le fait de bouger continuellement quelques minutes le téléphone, la batterie, l'étui ou tout moyen de communication disposant d'un émetteur-récepteur, rechargera ces batteries ou piles.

On peut également, sans provoquer de vibrations et sans bouger et sans provoquer de vibrations du dispositif qui est fixé sur un téléphone portable mobile (cellulaire), un émetteur-récepteur, un étui, un support, et toujours dans une nuit totalement noire produire aussi une tension et du courant électrique et ceci grâce au remontoir mécanique à ressort, et le fait de le remonter en tournant sur lui-même le papillon comprime le ressort. Si on lâche manuellement le papillon, il libère le ressort et fait tourner un petit alternateur extra plat qui rechargera la batterie en débitant une tension et un courant électrique. De ce fait ces inventions ont la particularité d'être sur un même dispositif de recharge et permettent de produire du courant électrique par l'intermédiaire de la lumière, ou éclairage artificiel et par l'intermédiaire de la vibration et/ou par l'intermédiaire d'un mécanisme à remontoir.

Si ce dispositif de recharge est inséré sur un étui de protection, il sera doté d'une connexion rapide et sans branchement grâce à de l'induction magnétique qui permettra, très facilement, de glisser le téléphone dans l'étui de protection et la batterie du dispositif de l'étui rechargera et alimentera automatiquement le téléphone par l'intermédiaire d'un connecteur à induction magnétique. Ainsi, la tension et le courant électrique passeront par aimantation entre l'étui et le téléphone portable mobile (cellulaire). Ainsi cet étui aura la particularité de se recharger et d'alimenter le téléphone portable mobile aussi bien sur le tableau de bord du véhicule, de jour, et l'invention permet également de se recharger et d'alimenter le téléphone lorsque le véhicule roule dans une nuit noire grâce aux vibrations provoquées par la marche du véhicule.

Ce dispositif de recharge de préférence extra plat peut être fixé de plusieurs manières, soit sur la batterie en un seul boîtier compact destiné à faire fonctionner entre autre le téléphone portable mobile (cellulaire) ce qui permet à la batterie de disposer de son propre dispositif de recharge grâce à la lumière et aux vibrations et de devenir mobile, portable et autonome et amovible.

Ce dispositif de recharge, de préférence extra plat, peut également être fixé et connecté sur la face arrière du téléphone portable mobile (cellulaire) où se trouve le compartiment des batteries (cache ou trappe) ; et/ou sur une ou toutes les parties des surfaces libres du téléphone portable mobile (cellulaire) et/ou être fixé sur un étui de protection afin d'alimenter, de maintenir, de recharger et de faire fonctionner le téléphone portable mobile (cellulaire) ou tout autre moyen de communication disposant d'un émetteur-récepteur.

Mais, si l'utilisateur veut protéger, par l'intermédiaire d'une housse ou d'un étui, son téléphone portable mobile (cellulaire) ou tout autre moyen de communication disposant d'un émetteur-récepteur par l'intermédiaire d'un étui, support, ou cache de protection, ce dispositif de recharge extra plat pourra également être fixé et inséré sur cet étui, support ou cache de protection et la connexion entre le téléphone et l'étui, par exemple, afin qu'il soit alimenté et fonctionne automatiquement se fera par un connecteur inductif et automatique car le fait d'insérer le téléphone dans un étui, un support ou cache de protection, permettra au téléphone portable mobile (cellulaire) de fonctionner de suite.

Lorsque l'électronique de gestion (7) de ce dispositif de recharge (4) détermine la lumière du jour (10) -luminosité ambiante extérieure- , elle la transforme en courant électrique (13), par l'intermédiaire de capteurs photovoltaïques (5) sensibles aux photons, afin de recharger continuellement et dans les meilleures conditions les batteries (2) au Nickel metal hybride, ou au Cadmium Nickel ou au Lithium ion du téléphone (1) portable mobile (cellulaire), ou de l'étui (21) de protection

Cette électronique de gestion (7) de ce dispositif (4) peut également déterminer une faible luminosité provoquée par un éclairage artificiel (8) à l'intérieur d'un bâtiment ou par une lumière provenant d'une source lumineuse telle qu'une lampe torche (9), elle donnera ordre d'amplifier la lumière artificielle qu'elle reçoit et ceci grâce à l'amplificateur de lumière (6) par l'intermédiaire de particules de loupes alvéoléés (11) des capteurs photovoltaïques (5), et la transformera en courant électrique (13) afin de recharger, avec une plus grande performance, les batteries (2) au Nickel metal hybride ou au Cadmium Nickel ou au lithium ion du téléphone (1) portable mobile (cellulaire) ou de l'étui (21) de protection afin qu'il devienne opérationnel de suite.

Après cette recharge batterie (2) effectuée, si la lumière artificielle (8) et/ou synthétique est très faible (pénombre), le dispositif de recharge (4) sera capable d'entretenir et de maintenir la charge batterie (2) pour que la consommation en courant électrique (13) du téléphone (1) portable, en veille et en attente, soit totalement ou partiellement réduite grâce à la mise en parallèle des capteurs photovoltaïques (5) du dispositif afin d'obtenir plus de courant électrique (13). Cette mise en parallèle se fait automatiquement par l'électronique de gestion (7). En effet, chaque capteur photovoltaïque restitue une tension et un courant électrique (13) dès détection de la lumière ou de l'éclairage artificiel (8). L'électronique de gestion (7) peut, automatiquement, en fonction de la demande de la batterie (2) élever la tension en mettant le dispositif de recharge (4) en série, à ce moment précis il y aura peu de courant électrique (13) ; mais cette électronique de gestion (7) pourra également mettre les capteurs photovoltaïques (5) en parallèle, et à ce moment précis le courant électrique (13) sera plus important avec une tension moins élevée.

Grâce à ces inventions, ce dispositif de recharge (4), le téléphone (1) portable mobile (cellulaire), l'étui (21) de protection, est d'autant plus autonome qu'il dispose de son propre dispositif de recharge (4) de batteries (2) avec un contrôle automatique de luminosité : "faible" lumière ou "haute" lumière qui est détecté dans un premier temps par les capteurs photovoltaïques (5), puis est géré par l'électronique de gestion (7) qui détermine si elle doit amplifier la lumière ou non, pour la restituer sous forme de courant électrique (13). Ce contrôle automatique de luminosité peut être obtenu par des capteurs photovoltaïques (5), des photodiodes (15), des photorésistances (16), etc....

L'amplification d'énergie lumineuse est contrôlée par l'électronique de gestion (7) mais peut être également une amplification mécanique par l'intermédiaire de particules de loupes alvéolées (11) en/et/ou forme de micro-billes incrustées et insérées sur les capteurs photovoltaïques (5) permettant de piéger la lumière du jour ou la lumière artificielle pour augmenter le rayonnement de la lumière, du boîtier du téléphone (1) portable mobile (cellulaire), de l'étui (21) de protection, par l'intermédiaire du dispositif de recharge (4). Mais ce dispositif de recharge (4) peut également recharger, entretenir et alimenter sa propre batterie (2), le téléphone (1) portable mobile (cellulaire), l'étui (21) de protection, et dès qu'ils détectent des vibrations (20) provoquées par des mouvements (19) de va et vient dûs à la marche d'un être humain, à un vélo, un véhicule, un bateau, etc...par l'intermédiaire de masselotte magnétique (17) extra plat dont le pourtour est équipé de bille en acier (18) qui en tournant provoque une énergie électrique par induction constituée d'une tension et d'un courant électrique (13) gérés par l'électronique de gestion (7). Cette recharge batterie peut également être faite par des mécanismes à ressorts (22) dont le remontage se fait manuellement, à l'aide de la main, par l'intermédiaire d'un papillon (23) identique à celui d'un réveil mécanique, placé sur le dispositif de recharge (4). En effet, une fois le mécanisme à ressorts (22) remonté, il entraînera, par inertie, soit la masselotte magnétique (17) soit un alternateur extra plat (25) qui génèrera automatiquement du courant électrique (13) destiné à faire fonctionner, à alimenter, à entretenir ou à recharger les batteries (2) du téléphone (1) portable mobile (cellulaire), de l'étui (21) ou de sa propre batterie.

Ce dispositif de recharge (4) peut être fixé et inséré sur la batterie (2), le téléphone (1) portable mobile (cellulaire), sur un étui (21) de protection ou tout support et est capable d'alimenter, d'entretenir, et de recharger sans connexion filaire, le téléphone (1) portable mobile (cellulaire), la batterie (2) par l'intermédiaire d'un connecteur inductif (24). En effet, une fois le téléphone (1) portable mobile (cellulaire) inséré dans l'étui (21) de protection, l'alimentation du téléphone (1) se fera automatiquement et par induction (alimentation par aimantation "positif" et alimentation par aimantation "négatif") à l'aide d'un connecteur inductif (24) de l'étui (21) de protection.

Un ou plusieurs dispositifs de recharge (4) peuvent être fixés et insérés sur la batterie (2) du téléphone (1) portable mobile (cellulaire), sur le téléphone (1) portable mobile (cellulaire), sur l'étui (21) de protection, sur le support et sur tout système de communication disposant d'émetteur-récepteur.

Si la consommation en courant électrique du téléphone (1) portable mobile (cellulaire) est importante, lorsqu'il est en marche, et si l'utilisateur veut s'en servir, ce dispositif de recharge (4) rechargera, alimentera et fera fonctionner, à la lumière, et/ou à l'éclairage artificiel (8) et par la vibration (20) et par le mécanisme à ressort (22) manuel. Par contre, si la consommation électrique du téléphone (1) portable mobile (cellulaire) n'est pas importante, ce dispositif de recharge (4), rechargera, alimentera et fera fonctionner soit uniquement à la lumière, soit uniquement par de la vibration.

Les dessins ci-joints (planche 1/2 et planche 2/2), donnés à titre d'exemples indicatifs et non-limitatifs, permettront aisément de comprendre l'invention.

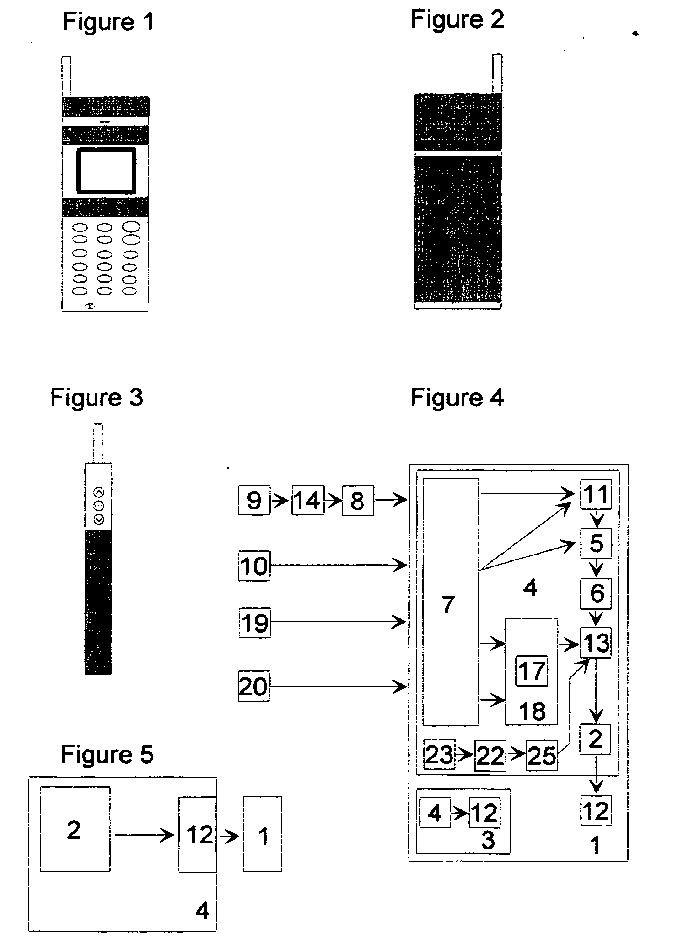

La figure 1 de la planche 1/2 est une vue de la face avant du téléphone (1) portable mobile (cellulaire), où est fixée, sur toutes les parties de la surface libre du téléphone (1), l'équipement du dispositif de recharge (4) constitué de capteurs photovoltaïques (5), d'amplificateur de lumière (6), d'une électronique de gestion (7), de particules de loupes alvéolées (11), de masselotte magnétique (17) de billes en acier (18), du mécanisme à ressort (22) avec son remontoir manuel à papillon (23), l'alternateur extra plat (25) et de la batterie (2), connecté grâce au connecteur (12).

La figure 2 de la planche 1/2 est une vue de la face arrière du téléphone (1) portable mobile (cellulaire), où est fixé, sur le haut (surface libre) du téléphone (1), l'équipement du dispositif de recharge (4) constitué de capteurs photovoltaïques (5), d'amplificateur de lumière (6), d'une électronique de gestion (7), de particules de loupes alvéoléés (11), de masselotte magnétique (17) et de billes en acier (18), du mécanisme à ressort (22) avec son remontoire manuel à papillon (23), l'alternateur extra plat (25) connecté grâce au connecteur (12). Sur la face arrière du téléphone (1) portable mobile (cellulaire), est fixé sur le bas du téléphone (1) portable mobile, sur le compartiment batterie (3), le dispositif de recharge (4) constitué de capteurs photovoltaïques (5), d'amplificateur de lumière (6), d'une électronique de gestion (7), de particules de loupes alvéolées (11) de masselotte magnétique (17) et de billes en acier (18), connecté grâce au connecteur (12).

La figure 3 de la planche 1/2 est une vue de l'un ou des côtés du téléphone (1) portable mobile (cellulaire) où est fixé l'équipement du dispositif de recharge (4) constitué de capteurs photovoltaïques (5), d'amplificateur de lumière (6), d'une électronique de gestion (7), de particules de loupes alvéolées (11) de masselotte magnétique (17) et de billes en acier (18), du mécanisme à ressort (22) avec son remontoir manuel à papillon (23), l'alternateur extra plat (25) connecté grâce au connecteur (12).

La figure 4 de la planche 1/2 est une vue d'ensemble du fonctionnement du dispositif de recharge (4) du téléphone (1) portable mobile (cellulaire). Lorsqu'il reçoit de la lumière du jour (10) (extérieure) ou de l'éclairage artificiel (8) provoqué par tous types de générateurs lumineux (14) exemple : lampe torche (9), le dispositif de recharge (4) constitué en un seul et même boîtier, l'électronique de gestion (7), par l'intermédiaire des particules alvéolées (11) incrustées et insérées sur les capteurs photovoltaïques (5), amplifiera la lumière artificielle reçue de la lampe torche (9) par l'intermédiaire de l'amplificateur de lumière (6) qui la transformera en courant électrique (13) afin de recharger, d'entretenir, et de maintenir la batterie (2) au Cadmium Nickel ou au Nickel metal hybride ou au lithium ion, du dispositif de recharge (4) connecté par un connecteur (12) au téléphone (1) portable mobile (cellulaire) mais également ce dispositif (4) pourra être connecté par le connecteur (12) au compartiment batteries (3) du téléphone (1) portable mobile (cellulaire) ; et lorsqu'il reçoit des vibrations (20) ou des mouvements (19) cela fait bouger la bille en acier (18) qui tournera autour du noyau de masselotte magnétique (17) gérée par l'électronique de gestion (7) puis transformés en courant électrique (13). Sur cette figure 4, se trouve également dans le dispositif de recharge (4) un alternateur extra plat (25) qui produira du courant électrique (13) grâce au mécanisme à ressort (22) actionné par le papillon (23) à remontoire manuel.

La figure 5 de la planche 1/2 est une vue d'ensemble du dispositif de recharge (4) qui est solidaire et intégré sur la batterie (2) amovible munie d'un connecteur (12) ou d'un connecteur inductif (24) pour alimenter tout moyen de communication par l'intermédiaire d'un téléphone portable mobile (cellulaire). Ce dispositif de recharge compact (4) est constitué de capteurs photovoltaïques (5), de particules de loupes alvéolées (11), d'amplificateur d'énergie lumineuse (6), d'une électronique de gestion (7), de masselotte magnétique (17), de billes en acier (18), du mécanisme à ressort (22) avec son remontoir manuel à papillon (23), l'alternateur extra plat (25) et de batterie (2) qui a la particularité de former un seul et même dispositif de recharge (4) et a pour particularité de transformer la lumière du jour (10) et/ou l'éclairage artificiel (8) et la vibration (20) ou un mouvement (19) en courant électrique (13) afin de recharger les batteries (2) au Nickel metal hybride, au Cadmium Nickel ou au lithium ion, amovibles, adaptables, interchangeables et connectables (12) sur le téléphone (1) portable mobile (cellulaire).

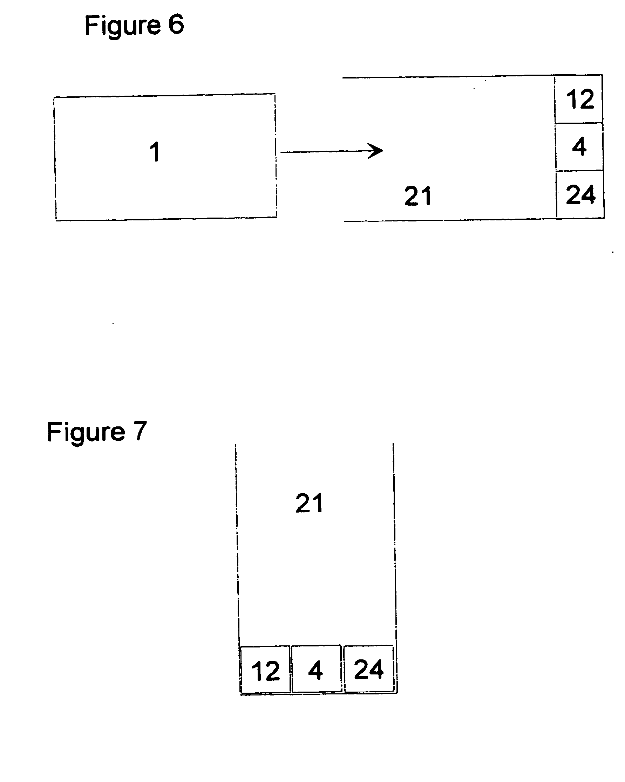

La figure 6 de la planche 2/2 est une vue d'ensemble représentant le téléphone (1) portable mobile (cellulaire) avec ou sans dispositif de recharge (4) et avec ou sans dispositif de batterie (2), s'introduisant dans l'étui (21) de protection et devient opérationnel grâce à l'alimentation du dispositif (4) de l'étui (21) de protection branché par l'intermédiaire du connecteur (12) ou par un connecteur inductif (24).

La figure 7 de la planche 2/2 est une vue d'ensemble d'un étui (21) ou tout autre forme de support ou de cache de protection où est fixé et inséré le dispositif de recharge (4), le connecteur (12) ou le connecteur inductif (24) pouvant recevoir et alimenter en tension et courant électrique (13) tout type de téléphone (1) portable mobile (cellulaire) ou tout système de communication disposant d'un émetteur-récepteur.
TELEPHONE (1)
BATTERIE (2)
COMPARTIMENT BATTERIE (3)
DISPOSITIF DE RECHARGE (4)
CAPTEURS PHOTOVOLTAIQUES (5)
AMPLIFICATEUR D'ENERGIE LUMINEUSE (6)
ELECTRONIQUE DE GESTION (7)
ECLAIRAGE ARTIFICIEL (8)
LAMPE TORCHE (9)
LUMIERE DU JOUR (10)
PARTICULES DE LOUPES ALVEOLEES (11)
CONNECTEUR (12)
COURANT ELECTRIQUE (13)
GENERATEUR LUMINEUX (14)
PHOTODIODES (15)
PHOTORESISTANCES (16)
MASSELOTTE MAGNETIQUE (17)
BILLES EN ACIER (18)
MOUVEMENTS (19)
VIBRATIONS (20)
ETUI (21)
MECANISME A RESSORT (22)
PAPILLON (23)
CONNECTEUR INDUCTIF (24)
ALTERNATEUR EXTRA PLAT (25)

## Revendications

1. Téléphone (1) comprenant un émetteur-récepteur et un dispositif de recharge (4) prévu pour charger, entretenir et alimenter électriquement une batterie (2) du téléphone, **caractérisé en ce que** le dispositif de recharge (4) comporte un transducteur optique-éctrique constitué de capteurs photovoltaïques (5, 11), un transducteur de mouvement mécanique en énergie électrique constitué par un détecteur de vibrations et un papillon (17,18) et une électronique de gestion (7) prévue pour gérer le fonctionnement des transducteurs.

2. Téléphone selon la revendication 1 en combinaison avec un étui (21) pour téléphone, **caractérisé en ce que** le dispositif de recharge (4) est inséré et fixé directement dans l'étui (21), le téléphone (1) pouvant être inséré dans l'étui (21) et ayant une forme extérieure adaptée à la forme intérieure de l'étui (21) de manière à ce que le dispositif de recharge puisse charger, entretenir et alimenter la batterie (2) du téléphone (1) dans n'importe quelle position du téléphone (1) et de l'étui (21).

3. Téléphone selon l'une des revendications 1 ou 2, **caractérisé en ce que** le transducteur de mouvement mécanique en énergie électrique (17, 18) comprend un mécanisme à ressort (22, 23, 25).

4. Téléphone selon l'une des revendications précédentes, **caractérisé en ce que** le transducteur de mouvement mécanique en énergie électrique comprend une masselotte magnétique (17) ayant un pourtour équipé d'une bille en acier (18) permettant de créer de l'énergie électrique par induction.

5. Téléphone selon l'une des revendications précédentes, **caractérisé en ce que** l'électronique de gestion (7) est prévue pour connecter le capteur photo voltaïque (5) en série ou parallèle avec le dispositif de recharge (4) en réponse à une indication de l'énergie nécessitée par la batterie.

6. Téléphone selon l'une des revendications précédentes, **caractérisé en ce que** le transducteur optique-électrique (5, 6, 11) comprend un amplificateur électronique de la lumière (6) et un amplificateur optique de la lumière (11).

7. Téléphone selon l'une des revendications précédentes, **caractérisé en ce que** le transducteur optique-électrique (5, 6, 11) est sensible à la lumière du jour et à la lumière artificielle et est situé dans un étui (21) protégeant le téléphone (1), l'étui (21) étant prévu pour permettre au téléphone (1) de fonctionner et d'être chargé automatiquement par un connecteur inductif (24).

8. Téléphone selon l'une des revendications précédentes, **caractérisé en ce que** le transducteur optique-électrique (5, 6, 11) est sensible à la lumière du jour et à la lumière artificielle et est situé dans un étui (21) protégeant le téléphone (1), l'étui (21) étant prévu pour permettre au téléphone (1) de fonctionner et d'être chargé automatiquement par un moyen indicatif ayant la capacité de créer des connections énergétiques entre le téléphone (1) et un étui de protection (21) dans n'importe quelle position.

## Claims

1. Telephone (1) comprising a transmitter-receiver and a recharging device (4) for the electric charging, maintaining and powering of a battery (2) for the telephone, **characterised in that** the recharging device (4) comprises an optical-electrical transducer consisting of photovoltaic sensors (5, 11), a mechanical motion to electrical energy transducer consisting of a vibration detector and a butterfly winder (17, 18) and an electronic management unit (7) to manage the operation of the transducers.

2. Telephone according to Claim 1 in combination with a case (21) for a telephone, **characterised in that** the recharging device (4) is inserted and fixed directly into the case (21), the telephone (1) being able to be inserted into the case (21) and having an exterior shape matching the interior shape of the case (21) so that the recharging device can charge, maintain and power the battery (2) for the telephone (1) in any position of the telephone (1) and the case (21),

3. Telephone according to one of Claims 1 or 2, **characterised in that** the mechanical motion to electrical energy transducer (17, 18) comprises a spring mechanism (22,23,25).

4. Telephone according to one of the preceding claims, **characterised in that** the mechanical motion to electrical energy transducer comprises a magnetic counter-weight (17) having a periphery fitted with a steel ball (18) for creating electrical energy by induction.

5. Telephone according to one of the preceding claims, **characterised in that** the electronic management unit (7) is intended to connect the photovoltaic sensor (5) in series or in parallel with the recharging device (4) in response to an indication of the energy required by the battery.

6. Telephone according to one of the preceding claims, **characterised in that** the optical-electrical transducer (5, 6, 11) comprises an electronic light energy amplifier (6) and an optical light energy amplifier (11)

7. Telephone according to one of the preceding claims, **characterised in that** the optical-electrical transducer (5, 6,11) is responsive to daylight and to artificial lighting and is located in a case (21) protecting the telephone (1), the case (21) being arranged to enable the telephone (1) to operate and be powered automatically through an inductive connector (24).

8. Telephone according to one of the preceding claims, **characterised in that** the optical-electrical transducer (5, 6, 11) is responsive to daylight and to artificial lighting and is located in a case (21) protecting the telephone (1), the case (21) being arranged to enable the telephone (1) to operate and be powered automatically through an inductive means having the capability to make power connections between the telephone (1) and a protective case (21) in any position.

## Patentansprüche

1. Telefon (1) mit einem Sende-Empfänger und einer Vorrichtung zur Wiederladung (4), die dazu dient, eine Batterie (2) des Telefons (1) elektrisch zu laden, in Stand zu halten und zu speisen, **dadurch gekennzeichnet, dass** die Vorrichtung zum Wiederladen (4) einen Wandler von Licht zu elektrischer Energie aus photovoltaischen Zellen (5, 11), einen Wandler von mechanischer Bewegung zu elektrischer Energie, der aus einem Vibrationsdetektor und einem Flügelaufzug (17, 18) besteht, und eine elektronische Steuereinrichtung (7) zur Funktionssteuerung der Wandler umfasst..

2. Telefon nach Anspruch 1 in Kombination mit einem Etui (21) für das Telefon, **dadurch gekennzeichnet, dass** die Vorrichtung zum Wiederladen (4) direkt in das Etui (21) eingesetzt und in diesem befestigt ist, wobei das Telefon (1) in das Etui (21) eingesetzt werden kann und eine äußere Form besitzt, die an die innere Form des Etuis (21) angepasst ist, so dass die Vorrichtung zum Wiederladen die Batterie (2) des Telefons (1) in beliebiger Position des Telefons (1) und des Etuis (21) aufladen, in Stand halten und speisen kann.

3. Telefon nach einem der Ansprüche 1 oder 2, **dadurch gekennzeichnet, dass** der Wandler von mechanischer Bewegung zu elektrischer Energie (17, 18) einen Federmechanismus (22, 23, 25) besitzt.

4. Telefon nach einem der vorhergehenden Ansprüche, **dadurch gekennzeichnet, dass** der Wandler von mechanischer Bewegung zu elektrischer Energie ein magnetisches Ausgleichsgewicht (17) besitzt, dessen äußerer Umfang mit einer Stahlkugel (18) versehen ist, wodurch elektrische Energie durch Induktion erzeugt werden kann.

5. Telefon nach einem der vorhergehenden Ansprüche, **dadurch gekennzeichnet, dass** die elektronische Steuerung (7) in Reaktion auf eine Indikation des Energiebedarfs der Batterie dazu dient, die photovoltaische Zelle (5) in Reihe oder parallel mit der Vorrichtung zum Wiederladen (4) zu verbinden.

6. Telefon nach einem der vorhergehenden Ansprüche, **dadurch gekennzeichnet, dass** der Wandler von Licht zu elektrischer Energie (5, 6, 11) einen elektronischen Licht-Verstärker (6) und einen optischen Licht-Verstärker (11) besitzt.

7. Telefon nach einem der vorhergehenden Ansprüche, **dadurch gekennzeichnet, dass** der Wandler von Licht zu elektrischer Energie (5, 6, 11) für Tageslicht und künstliches Licht empfindlich ist und in einem Etui (21) untergebracht ist, welches das Telefon (1) schützt, wobei das Etui (21) dazu dient, dass das Telefon (1) funktionieren und automatisch mittels einer induktiven Steckverbindung (24) aufgeladen werden kann.

8. Telefon nach einem der vorhergehenden Ansprüche, **dadurch gekennzeichnet, dass** der Wandler von Licht zu elektrischer Energie (5, 6, 11) für Tageslicht und künstliches Licht empfindlich ist und in einem Etui (21) untergebracht ist, welches das Telefon (1) schützt, wobei das Etui (21) dazu dient, dass das Telefon (1) funktionieren und durch ein induktives Element automatisch aufgeladen werden kann, welches in der Lage ist, energetische Verbindungen zwischen dem Telefon (1) und einem Schutzetui (21) in irgendeiner beliebigen Position zu erzeugen.
